# EUROPEAN PATENT SPECIFICATION

(11) **EP 4 021 977 B1**
(45) Date of publication and mention of the grant of the patent: **24.05.2023**
(21) Application number: 20757361.9
(22) Date of filing: 21.08.2020
(51) Int. Cl.: C08L 69/00

(54) **FLAME-RETARDANT POLYCARBONATE COMPOSITION AND MOLDED PARTS AS WELL AS ARTICLES MADE THEREFROM**
FLAMMHEMMENDE POLYCARBONATZUSAMMENSETZUNG UND FORMTEILE SOWIE DARAUS HERGESTELLTE ARTIKEL
COMPOSITION DE POLYCARBONATE IGNIFUGE ET PIÈCES MOULÉES ET ARTICLES FABRIQUÉS À PARTIR DE CETTE COMPOSITION

(30) Priority: 28.08.2019 WO PCT/CN2019/102986; 11.09.2019 EP 19196608
(43) Date of publication of application: 06.07.2022
(73) Proprietor: Covestro Intellectual Property GmbH & Co. KG, 51373 Leverkusen (DE)
(72) Inventor: REN, Lily, Shanghai 200129 (CN); ZHU, Qiu, Shanhai, Pudong District 201315 (CN)
(74) Representative: Levpat
(86) International application number: PCT/EP2020/073469
(87) International publication number: WO 2021/037705

(56) References cited:
- US-A1- 2012 053 271
- US-B2- 9 290 654

## Description

### TECHNICAL FIELD

The present invention relates to a polycarbonate composition. In particular, the present invention relates to a flame-retardant polycarbonate composition, molded parts and articles made therefrom.

### BACKGROUND ART

Flame-retardant polycarbonate (PC) material owns balanced mechanical (esp. ductility), thermo-stability as well as processing properties and so it has being one of major kind of popular housing material for ITA and E&E applications, for example, the front/back covers of notebook, netbook and display modules.

US20130131241A describes a flame-retardant thermoplastic composition with good flame retardant effect for thin wall molded parts, while flow properties, impact resistance and modulus of elasticity are simultaneously good. Polycarbonate compositions comprising a polycarbonate, a flame retardant, talc, glass fibres and an acid stabilizer in synergistic quantities are described.

JP 2007-070468A describes glass-fiber-reinforced and flame-retardant resin compositions which, by virtue of the use of a flat glass fibre, and also of another additional lamellar material, provide not only good mechanical stability but also low anisotropy, good flowability and also an advantageously flame-retardant effect.

As for the producing process for the final housing part, normally the injection molding process is applied firstly and after that, the parts still need to apply spray coating or other surface treatment processes to achieve specific surface appearance effects, the haptic properties, and improved scratch resistance property, etc. The injection molding and spray coating processes are separate processes as well known technologies.

In recent years, a new process called "Direct Coating (DC)" has been developed to produce composites with good surface appearance effects. This DC manufacturing process integrated injection molding of plastic substrate and reaction injection molding process of polyurethane coating in one step.

For example, US2013196130 A1 discloses composites combining non-flame-retardant polycarbonate compositions as the substrate and polyurethane coating applied with on-line molding process, that is "Direct Coating (DC)". The composites can be used for automotive applications, for example, interior decorated parts.

In order to apply DC process, the substrate needs to have enough/good adhesion strength with the coating layer.

To extend the DC technology and explore new opportunities on IT & consumer electronics applications, it is necessary to develop novel flame-retardant polycarbonate compositions which must fulfill the DC processing with improved adhesion strength with the polyurethane coating layer and maintain other properties as housing materials.

Generally, it is well known that, for a polycarbonate composition, the more ABS (Acrylonitrile-Butadiene-Styrene rubber) added, the better adhesion property, and when BDP (Bisphenol-A

Bis(Diphenyl Phosphate)) is used as a flame retardant agent in the polycarbonate compositions, it shows negative effect on the adhesion between the polycarbonate substrate and the polyurethane coating layer. In flame-retardant polycarbonate products, in order to achieve a good flame retardant property, normally it is not allowed to add too much ABS (impact modifiers) and at the same time, certain amounts of flame-retardant agents, such as phosphorus-containing flame-retardant agent, have to be added. Therefore, it is difficult for flame-retardant polycarbonate products to achieve good adhesion with the coating layer.

There is still a need for a flame-retardant polycarbonate composition having good adhesion with polyurethane coating.

### SUMMARY OF THE INVENTION

An object of the present invention is to provide a flame-retardant polycarbonate composition having good adhesion with polyurethane coating.

Another object of the present invention is to provide a part comprising the flame-retardant polycarbonate composition.

Still another object of the present invention is to provide an article comprising the part comprising the flame-retardant polycarbonate composition.

Thus, according to a first aspect, the present invention provides a flame-retardant polycarbonate composition comprising the following components:
A) 30- 70 wt.% of an aromatic polycarbonate,
B) 3-10 wt.% of a rubber-modified vinyl (co)polymer,
C) 3-11 wt.% of an aromatic polyester;
D) 10-30 wt.% of a reinforcement material;
E) 10-20 wt % of a phosphorus containing flame retardant; and
F) 0.5-3 wt.% of a chain extender;

All contents are based on the total weight of the composition.

According to a second aspect, the present invention provides a molded part produced from the flame-retardant polycarbonate composition according to the first aspect of the present invention.

According to a third aspect, the present invention provides an article comprising a substrate produced from the flame-retardant polycarbonate composition according to the first aspect of the present invention and a polyurethane layer on at least one side of the substrate.

According to a fourth aspect, the present invention provides a process for making the article according to the third aspect of the present invention, comprising the following steps:
i) injecting the melt of the composition according to the first aspect of the present invention into a first mould cavity to form a substrate,
(ii) enlarging the cavity of the injection mould to generate a gap between the substrate and the mould surface of the enlarged cavity,
(iii) injecting a polyurethane coating into the gap to form the polyurethane layer; and
(iv) removing the composite component obtained from the mould cavity.

The flame-retardant polycarbonate composition according to the present invention has good toughness, melt flowability, high heat distortion temperature, high rigidity, and can be used as a housing material for ITA and E&E applications, for example, the front/back covers of notebook, netbook and display modules.

The molded part produced from the flame-retardant polycarbonate composition according to the present invention has good adhesion with a polyurethane coating.

Other subjects and characteristics, aspects and advantages of the present invention will emerge even more clearly on reading the detailed description and the examples that follows.

### DETAILED DESCRIPTION OF THE INVENTION

According to the first aspect, the present invention provides a flame-retardant polycarbonate composition comprising the following components:
A) 30-70 wt.% of an aromatic polycarbonate,
B) 3-10 wt.% of a rubber-modified vinyl (co)polymer,
C) 3-11 wt.% of an aromatic polyester;
D) 10-30 wt.% of a reinforcement material;
E) 10-20 wt % of a phosphorus containing flame retardant; and
F) 0.5-3 wt.% of a chain extender;

All contents are based on the total weight of the composition.

As used herein, any amount or value used to indicate the content of a component, a processing parameter, etc, is understand to be modified by the term "about".

As used herein, unless otherwise indicated, the limits of a range of values are included within this range, in particular in the expressions "of between" and "ranging from ... to ...".

As used herein, the expression "at least one" used in the present description is equivalent to the expression "one or more".

As used herein, the term "comprising" is to be interpreted as encompassing all specifically mentioned features as well optional, additional, unspecified ones.

As used herein, the use of the term "comprising" also discloses the embodiment wherein no features other than the specifically mentioned features are present (*i.e.* "consisting of").

Unless defined otherwise, all technical and scientific terms used herein have the same meaning as commonly understand by one of ordinary skill in the art to which the present invention pertains.

### Component A

According to the first aspect of the present invention, an aromatic polycarbonate is used in the polycarbonate composition as component A.

Suitable aromatic polycarbonates used according to the present invention are known from the literature or may be produced by processes known from the literature (for the production of aromatic polycarbonates see for example Schnell, "Chemistry and Physics of Polycarbonates", Interscience Publishers, 1964 and DE-AS 1 495 626, DE-OS 2 232 877, DE-OS 2 703 376, DE-OS 2 714 544, DE-OS 3 000 610, DE-OS 3 832 396.

Aromatic polycarbonates are produced e.g. by the melt process or by reaction of diphenols with carbonic acid halides, preferably phosgene and/or with aromatic dicar-boxylic acid dihalides, preferably benzene dicarboxylic acid dihalides, by the phase interface process, optionally using chain stoppers, for example monophenols and optionally using trifunctional or more than trifunctional branching agents, for example triphenols or tetraphenols.

Diphenols for the production of the aromatic polycarbonates are preferably those of the formula (I) 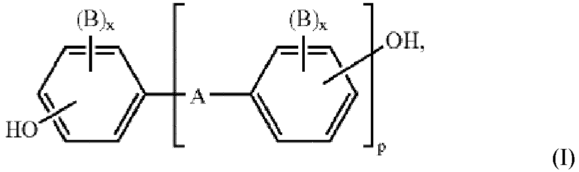 wherein
A is a single bond, C₁-C₅-alkylene, C₂-C₅-alkylidene, C₅-C₆-cycloalkylidene, -O-, -SO-, - CO-, -S-, -SOz-, C₆-C₁₂-arylene, onto which further aromatic rings, optionally containing heteroatoms, may be condensed, or a group of the formula (II) or (III) 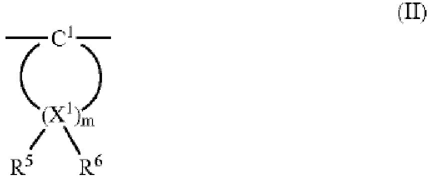 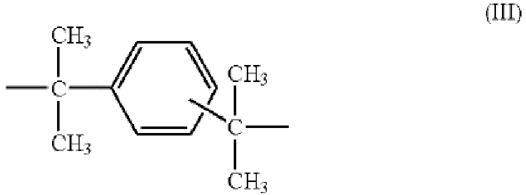
B is, in each case, C₁-C₁₂-alkyl, preferably methyl, halogen, preferably chlorine and/or bromine
x in each case, independently of each other, is 0, 1 or 2, p is 1 or 0, and
R⁵ and R⁶ may be selected individually for each X', independently of each other, as hydrogen or C₁-C₆-alkyl, preferably hydrogen, methyl or ethyl,
X' is carbon and
m is an integer from 4 to 7, preferably 4 or 5, provided that
R⁵ and R⁶ are both alkyl on at least one X' atom.

Preferred diphenols are hydroquinone, resorcinol, dihy-droxydiphenols, bis-(hydroxypheny1)-C₁-C₅-alkanes, bis- (hydroxyphenyl)-C₅-C₆-cycloalkanes, bis-(hydroxypheny1)-ethers, bis-(hydroxyphenyl)-sulfoxides, bis-(hydroxyphenyl)-ketones, bis-(hydroxyphenyl)-sulfones and a,a-bis-(hydroxyphenyl)-diisopropyl-benzenes and their ring-brominated and/or ring-chlorinated derivatives.

Particularly preferred diphenols are 4,4'-dihydroxydiphe-nyl, bisphenol A, 2,4-bis(4-hydroxyphenyl)-2-methylbu-tane, 1,1 -bis - (4 -hydroxyphenyl)-cyclohexane, 1,1-bis-(4-hydroxypheny1)-3,3,5-trimethyl cyclohexane, 4,4'-dihydroxydiphenyl sulfide, 4,4'-dihydroxydiphenyl-sulfone and their di- and tetrabrominated or chlorinated derivatives such as for example 2,2-bis(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane.

2,2-bis-(4-hydroxyphenyl)-propane (bisphenol A) is preferred in particular.

The diphenols may be used individually, or in any mixture.

The diphenols are known from the literature or may be obtained by processes known from the literature.

Suitable chain stoppers for the production of the thermoplastic, aromatic polycarbonates are for example phenol, p-chlorophenol, p-tert.-butyl phenol or 2,4,6-tribromophe-nol, but also long chain alkyl phenols such as 4-(1,3-tetramethylbutyl)-phenol according to DE-OS 2 842 005 or monoalkylphenol or dialkyl phenols containing a total of 8 to 20 C atoms in the alkyl substituents such as 3,5-di-tert.-butyl phenol, p-iso-octyl phenol, p-tert. octyl phenol, p-dodecyl phenol and 2-(3,5-dimethylheptyl)-phenol and 4-(3,5-dimethylheptyl)-phenol. The quantity of chain stoppers to be used is generally 0.5 mol. % to 10 mol. %, in relation to the molar sum of the diphenols used in each case.

The thermoplastic, aromatic polycarbonates may be branched in the known way, and preferably by incorporating 0.05 to 2.0 mol. % in relation to the sum of the diphenols used, of trifunctional or more than trifunctional compounds, for example those having three or more phenolic groups.

Both homopolycarbonates and copolycarbonates are suitable. 1 to 25 wt. %, preferably 2.5 to 25 wt. % (in relation to the total quantity of diphenols to be used) of polydiorganosiloxanes with hydroxyaryloxy terminal groups may also be used for the production of copolycarbonates according to Component A of the invention. These are known (see for example U.S. Pat. No. 3,419,634) or may be produced by processes known from the literature. The production of copolycarbonates containing polydiorganosiloxanes is described e.g. in DE-A 3 334 782.

Preferred polycarbonates in addition to the bisphenol A homopolycarbonates are the copolycarbonates of bisphenol A containing up to 15 mol. % in relation to the molar sum of diphenols, of other diphenols mentioned as preferred or particularly preferred, in particular 2,2-bis(3,5-dibromo-4-hydroxyphenyl)-propane.

Aromatic dicarboxylic acid dihalides for the production of aromatic polyestercarbonates are preferably the diacid dichlorides of isophthalic acid, terephthalic acid, diphe-nylether-4,4'-dicarboxylic acid and naphthaline-2,6-dicar-boxylic acid.

Mixtures of diacid dichlorides of isophthalic acid and terephthalic acid in a ratio of 1:20 to 20:1 are preferred in particular.

When producing polyestercarbonates, a carbonic acid halide, preferably phosgene, is also used as a bifunctional acid derivative.

In addition to the monophenols already mentioned, their chlorocarbonic acid esters and the acid chlorides of aromatic monocarboxylic acids, which may optionally be substituted by C₁-C₂₂-alkyl groups or by halogen atoms, as well as aliphatic C₂-C₂₂ monocarboxylic acid chlorides are also possible chain stoppers for the production of the aromatic polyestercarbonates.

The quantity of chain stoppers is 0.1 to 10 mol. % in each case, in relation to mols of diphenols in the case of the phenolic chain stoppers, and to mols of dicarboxylic acid dichlorides in the case of the monocarboxylic acid chain stopper.

The aromatic polyestercarbonates may also have aromatic hydroxycarboxylic acids incorporated in them.

The aromatic polyestercarbonates may be either linear or branched in the known way (see also DE-A 2 940 024 and DE-A 3 007 934).

As branching agents it is possible to use e.g. trifunctional or polyfunctional carboxylic acid chlorides, such as trimesic acid trichloride, cyanuric acid trichloride, 3,3'-,4, 4'-benzophenonetetracarboxylic acid tetrachloride, 1,4,5,8- naphthaline tetracarboxylic acid tetrachloride or pyromel-litic acid tetrachloride, in quantities of 0.01 to 1.0 mol. % (in relation to the dicarboxylic acid dichlorides used) or trifunctional or polyfunctional phenols, such as phloroglucinol, 4,6-dimethy1-2,4,6-tri-(4-hydroxypheny1)-heptene-2,4,4-dimethyl-2,4-6-tri-(4-hydroxyphenyl)-heptane, 1,3,5-tri-(4-hydrox-yphenyl)-benzene, 1,1,1-tri-(4-hydroxyphenyl)-ethane, tri-(4-hydroxyphenyl)-phenylmethane,2,2-bis[4,4-bis(4-hydroxyphenyl)-cyclohexyl]-propane, 2,4-bis(4-hydroxyphenyl-isopropyl)-phenol, tetra-(4-hydroxyphenyl)- methane, 2, 6-bis (2 -hydroxy-5 -methyl -benzy1)-4-methyl-phenol, 2-(4-hydroxyphenyl)-2-(2,4-dihydroxyphenyl)-propane, tetra- (444 -hydroxyphenyl sopropyl]-phenoxy)-methane, 1,4 -bis [4,4' -dihydroxytripheny1)-methyll - benzene, may be used as branching agents in quantities of 0.01 to 1.0 mol. % in relation to the diphenols used. Phenolic branching agents may be added with the diphenols, acid chloride branching agents may be introduced together with the acid chlorides.

Preferably, the aromatic polycarbonates used according to the present invention have a weight average molecular weight (Mw) of at least 10000 g/mol, preferably of 20 000 g/mol to 300 000 g/mol.

As an example of aromatic polycarbonate, mention can be made to Makrolon^{@}2600 available from Covestro Polymers Co. Ltd, a linear bisphenol A polycarbonate, having a relative solution viscosity (ii) (measured on a solution of 0.5 g of polycarbonate in 100 ml of methylene chloride at 25° C.) of 1.28 and a weight-average molecular weight of 26000g/mol.

The thermoplastic aromatic polycarbonates may be used alone or in any mixture.

Advantageously, the polycarbonate is present in the polymer composition in amount ranging from 35 wt % to 65 wt %, preferably from 40 wt % to 60 wt %, relative to the total weight of the composition.

### Component B

According to the first aspect of the present invention, a rubber-modified vinyl (co)polymer is used in the polycarbonate composition as component B.

Preferably, the rubber-modified vinyl (co)polymer comprises,
B1) 5 to 95, preferably 8 to 90, in particular 20 to 85 wt.%, of at least one vinyl monomer on
B2) 95 to 5, preferably 92 to 10, in particular 80 to 15 wt.%, of one or more graft bases having glass transition temperatures of < 10 °C, preferably < 0 °C, particularly preferably < -20 °C,

The wt.% is calculated based on the weight of the rubber-modified vinyl (co)polymer.

The glass transition temperature was determined by means of dynamic differential calorimetry (DSC) in accordance with the standard DIN EN 61006 at a heating rate of 10 K/min with definition of the T_{g} as the midpoint temperature (tangent method).

The graft base B2 in general has an average particle size (dso value) of from 0.05 to 10 µm, preferably 0.1 to 5 µm, more preferably 0.2 to 1 µm .

The average particle size dso is the diameter above and below which in each case 50 wt.% of the particles lie. It can be determined by means of ultracentrifuge measurement (W. Scholtan, H. Lange, Kolloid, Z. und Z. Polymere 250 (1972), 782-l796).

The at least one vinyl monomer B1 are preferably mixtures of
B1.1) 50 to 99, preferably 65 to 85, in particular 75 to 80 wt.%., of vinylaromatics and/or vinylaromatics substituted on the nucleus (such as styrene, α-methylstyrene, p-methylstyrene, p-chlorostyrene) and/or methacrylic acid (C₁-C₈)-alkyl esters (such as methyl methacrylate, ethyl methacrylate) and
B1.2) 1 to 50, preferably 15 to 35, in particular 20 to 25 wt.%, of vinyl cyanides (unsaturated nitriles, such as acrylonitrile and methacrylonitrile) and/or (meth)acrylic acid (C₁-C₈)-alkyl esters, such as methyl methacrylate, n-butyl acrylate, t-butyl acrylate, and/or derivatives (such as anhydrides and imides) of unsaturated carboxylic acids, for example maleic anhydride and N-phenyl-maleimide,

The wt.% is calculated based on the weight of the vinyl monomer B1.

Preferred monomer B1.1 is chosen from monomers styrene, α-methylstyrene and methyl methacrylate. Preferred monomer B1.2 is chosen from monomers acrylonitrile, maleic anhydride and methyl methacrylate. More preferably, monomer B1.1 is styrene and monomer B1.2 is acrylonitrile.

As examples of the graft base B2, mention can be made of, diene rubbers, EP(D)M rubbers, that is to say those based on ethylene/propylene and optionally diene, and acrylate, polyurethane, silicone, chloroprene and ethylene/vinyl acetate rubbers and silicone/acrylate composite rubbers.

Preferred graft base B2 is chosen from diene rubbers, for example based on butadiene and isoprene, or mixtures of diene rubbers or copolymers of diene rubbers or mixtures thereof with further copolymerizable monomers (e.g. according to B1.1 and B1.2), with the proviso that the glass transition temperature of component B2 is below < 10 °C, preferably < 0 °C, particularly preferably < -20 °C.

Pure polybutadiene rubber is particularly preferred as the graft base B2.

Particularly preferred rubber-modified vinyl (co)polymers are for example, ABS or MBS polymers, such as are described e.g. in DE-OS 2 035 390 (= US 3 644 574) or in DE-OS 2 248 242 (= GB 1 409 275) and in Ullmanns, Enzyklopädie der Technischen Chemie, vol. 19 (1980), p. 280 et seq.

The rubber-modified vinyl (co)polymers can be prepared by free radical polymerization, e.g. by emulsion, suspension, solution or bulk polymerization, preferably by emulsion or bulk polymerization, in particular by emulsion polymerization.

Advantageously, the rubber-modified vinyl (co)polymer is present in the ploymer composition in amount ranging from 4 wt % to 10 wt %, preferably from 4 wt % to 8 wt %, relative to the total weight of the composition.

### Component C

According to the first aspect of the present invention, an aromatic polyester is used in the polycarbonate composition as component C.

The term polyester includes homo-polyesters and co-polyesters resins, these are resins the molecular structure of which include at least one bond derived from a carboxylic acid, preferably excluding linkages derived from carbonic acid. These are known resins and may be prepared through condensation or ester interchange polymerization of the diol component with the diacid according to known methods. Examples are esters derived from the condensation of a cyclohexanedimethanol with an ethylene glycol with a terephthalic acid or with a combination of terephthalic acid and isophthalic acid.

Suitable resins include poly(alkylene dicarboxylates). U.S. Pat. Nos. 2,465,319, 3,953,394 and 3,047,539 disclose suitable methods for preparing such resins.

Preferably, the aromatic polyester is selected from polyalkylene terephthaltes.

The suitable polyalkylene terephthalates are characterized by an intrinsic viscosity of at least 0.2 and preferably about at least 0.4 deciliters/gram as measured by the relative viscosity of a 1% solution in dichloroacetic acid at about 25°C. The upper limit is not critical but it generally does not exceed about 2.5 deciliters/gram. Especially preferred polyalkylene terephthalates are those with an intrinsic viscosity in the range of 0.4 to 1.3 deciliters/gram.

The alkylene units of the polyalkylene terephthalates which are suitable for use in the present invention contain from 2 to 5, preferably 2 to 4 carbon atoms. The alkylene units may be straight chains or branched chains.

As examples of polyalkeylene terephthalates which are suitable for use in the present invention, mention can be made of polyethylene terephthalate) (PET), poly(1,4-butylene terephthalate) (PBT), and poly(trimethylene terephthalate) (PTT).

In a preferred embodiment, polyethylene terephthalate) is used as component C.

Advantageously, the aromatic polyester is present in the ploymer composition in amount ranging from 5 wt % 10 wt %, preferably from 6 wt % to 10 wt %, relative to the total weight of the composition.

### Component D

According to the first aspect of the present invention, a reinforcement material is used in the polycarbonate composition as component D.

Preferably, the reinforcement material is glass fibers.

The glass fibers can be consisted of a glass composition selected from the group of M-, E-, A-, S-, R-, AR-, ECR-, D-, Q- or C-glasses.

The glass fibres may be used in the forms of continuous filament fibres (rovings), chopped glass fibres, ground fibres, glass fibre fabrics or mixtures thereof, preferably chopped glass fibres and ground fibres, more preferably chopped glass.

The length of the chopped glass fibres prior to compounding is preferably in the range from 0.5 to 10 mm, more preferably in the range from 1.0 to 8 mm and most preferably in the range from 1.5 to 6 mm.

The chopped glass fibres used may have different cross sections. Round, elliptical, oval, octagonal and flat cross sections are preferred, while the round, oval and also flat cross sections are more preferred.

The diameter of round fibres is preferably in the range from 5 to 25 µm, more preferably in the range from 6 to 20 µm and yet more preferably in the range from 7 to 17 µm.

Preferred flat and oval glass fibres have a height-to-width cross-sectional ratio of about 1.0:1.2 to 1.0:8.0, preferably 1.0:1.5 to 1.0:6.0, more preferably 1.0:2.0 to 1.0:4.0.

Flat and oval glass fibres preferably have an average fibre height of 4 µm to 17 µm, more preferably of 6 µm to 12 µm and yet more preferably of 6 µm to 8 µm and also an average fibre width of 12 µm to 30 µm, more preferably of 14 µm to 28 µm and yet more preferably of 16 µm to 26 µm.

In a preferred embodiment, the reinforcement material used is E-glass fibers with a length from 1.5 to 6 mm and a round cross section of 7 to 17 µm in diameter.

Advantageously, the reinforcement material is present in the polymer composition in amount ranging from 10 wt % to 28 wt %, preferably from 12 wt % to 25 wt %, relative to the total weight of the composition.

### Component E

According to the first aspect of the present invention, a phosphorus containing flame retardant is used in the polycarbonate composition as component E.

The phosphorus-containing flame retardant is preferably selected from monomeric and oligomeric phosphoric and phosphonic acid esters, phosphonate amines and phosphazenes.

Preferred monomeric and oligomeric phosphoric and phosphonic acid esters are phosphorus compounds of the general formula (IV) 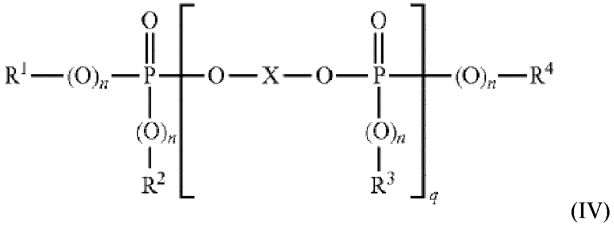 wherein
R¹, R², R³ and R⁴, independently of one another, each denote C₁-C₈ alkyl, C₅-C₆ cycloalkyl, C₆-C₂₀ aryl or C₇-C₁₂ aralkyl each optionally alkyl-substituted, preferably C₁-C₄ alkyl-substituted,
n independently of one another, denotes 0 or 1,
q denotes 0 to 30 and
X denotes a mononuclear or polynuclear aromatic residue with 6 to 30 carbon atoms or a linear or branched aliphatic residue with 2 to 30 carbon atoms, which can be OH-substituted and can contain up to eight ether bonds.

Preferably, R¹, R², R³ and R⁴, independently of one another, denote C₁-C₄ alkyl, phenyl, naphthyl or phenyl C₁-C₄ alkyl. The aromatic groups R¹, R², R³ and R⁴ can themselves be substituted with alkyl groups, preferably C₁-C₄ alkyl. Particularly preferred aryl residues are cresyl, phenyl, xylenyl, propylphenyl or butylphenyl.

Preferably, X in formula (IV) is a mononuclear or polynuclear aromatic residue with 6 to 30 carbon atoms. This is preferably derived from diphenols of formula (I).
n in formula (IV) can, independently of one another, be 0 or 1; n is preferably equal to 1.
q denotes integer from 0 to 30, preferably 0 to 20, particularly preferably 0 to 10, and in the case of mixtures average values from 0.8 to 5.0, preferably 1.0 to 3.0, more preferably 1.05 to 2.00, and particularly preferably from 1.08 to 1.60.
X, in particular, is derived from resorcinol, hydroquinone, bisphenol A or diphenylphenol. Particularly preferably, X is derived from bisphenol A.

Phosphorus compounds of formula (IV) are in particular tributyl phosphate, triphenyl phosphate, tricresyl phosphate, diphenyl cresyl phosphate, diphenyl octyl phosphate, diphenyl 2-ethylcresyl phosphate, tri(isopropylphenyl)phosphate, resorcinol bridged oligophosphate and bisphenol A bridged oligophosphate. The use of oligomeric phosphoric acid esters of formula (IV) derived from bisphenol A is particularly preferred.

Most preferred as component E is bisphenol A based oligophosphate according to formula (V).

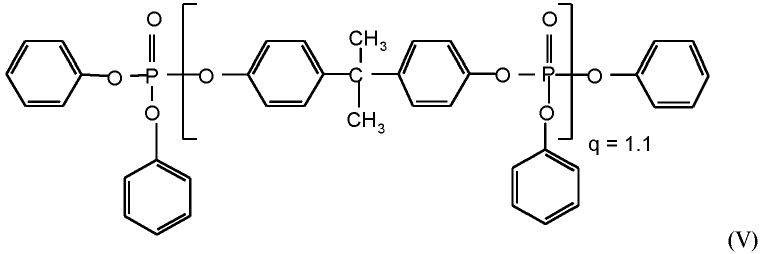

The phosphorus compounds according to component E are known (cf. e.g. EP-A 0 363 608, EP-A 0 640 655) or can be prepared by known methods in an analogous manner (e.g. Ullmanns Enzyklopadie der technischen Chemie, vol. 18, pp. 301 ff. 1979; Houben-Weyl, Methoden der organischen Chemie, vol. 12/1, p. 43; Beilstein vol. 6, p. 177).

As component E according to the invention, it is also possible to use mixtures of phosphates with different chemical structures and/or with the same chemical structure and different molecular weights. The flame retardants can be used individually or in any mixture with one another or in a mixture with other phosphorus-containing flame retardants.

Advantageously, the phosphorus containing flame retardant is present in the ploymer composition in amount ranging from 10 wt % to 18 wt %, preferably from 12 wt % to 18 wt %, relative to the total weight of the composition.

### Component F

According to the first aspect of the present invention, a chain extender is used in the polycarbonate composition as component F.

Preferably, the chain extender used is a polyfunctional chain extender with at least two reactive epoxy groups. The polyfunctional epoxy material can contain aromatic and/or aliphatic residues. Examples include epoxy novolac resins, cycloaliphatic epoxy resins, the reaction product of epoxidized vegetable (e.g., soybean, linseed) oils, epoxy resins based on bisphenol A, tetraphenylethylene epoxide, styrene-acrylic copolymers containing pendant glycidyl groups, glycidyl methacrylate-containing polymers and copolymers, and difunctional epoxy compounds such as 3,4-epoxycyclohexylmethyl-3,4-epoxycyclohexanecarboxylate.

In some embodiments, the polyfunctional chain extender is an epoxy-functional polymer, including oligomers. Exemplary polymers having multiple epoxy groups include the reaction products of one or more ethylenically unsaturated compounds (e.g., styrene, ethylene and the like) with an epoxy-containing ethylenically unsaturated monomer (e.g., a glycidyl C₁₋₄ (alkyl)acrylate, allyl glycidyl ethacrylate, and glycidyl itoconate).

In some embodiments, the polyfunctional chain extender is a styrene-acrylic copolymer (including an oligomer) containing glycidyl groups incorporated as side chains. Several useful examples are described in the International Patent Application WO 03/066704 A1, assigned to Johnson Polymer, LLC. These materials are based on copolymers with styrene and acrylate building blocks that have glycidyl groups incorporated as side chains. A high number of epoxy groups per polymer chain is desired, at least 10, for example, or greater than 15, or greater than 20. These polymeric materials generally have a weight-average molecular weight(Mw) ranging from 3000 to 15000 Daltons, preferably from 4000 to 12000 Daltons, and more preferably ranging from 6000 to 10000 Daltons. These are commercially available for example from Johnson Polymer, LLC (now BASF) under the trade name of JONCRYL, more specifically, JONCRYL ADR 4368, which has a weight average molecular weight of 7250 and an Epoxy equivalent weight of 310 g/mol.

Advantageously, the chain extender is present in the polycarbonate composition in an amount ranging from 0.5 wt % to 2.5 wt %, preferably from 0.8 wt % to 2.5 wt %, more preferably 0.8 wt% to 2 wt%, relative to the total weight of the composition.

### Additional polymer additives

The polycarbonate composition according to the present invention may further comprise one or more additional polymer additives as component G.

Preferably, the additional polymer additive is selected from antidripping agents (for example compounds from the substance classes of fluorinated polyolefins, for example PTFE), internal and external lubricants and mould release agents (for example pentaerythritol tetrastearate, montan wax or polyethylene wax), flowability auxiliary agents, antistatics, conductivity additives, stabilizers (for example UV/light stabilizers, heat stabilizers, antioxidants, transesterification inhibitors, agents which prevent hydrolysis), additives which improve scratch resistance (for example silicone oils), IR absorbents, optical brighteners, fluorescent additives, and dyestuffs and pigments (for example carbon black, titanium dioxide or iron oxide), or mixtures thereof.

The compositions according to the present invention particularly preferably contain at least one mould release agent, preferably pentaerythritol tetrastearate.

The skilled in the art can adjust the amount of the polymer additive as desired.

The flame-retardant polycarbonate composition according to the present invention can be prepared by a variety of methods involving intimate admixing of the materials desired in the composition.

For example, the materials desired in the composition are first blended in a high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water batch and pelletized. The pellets can be one-fourth inch long or less as described. Such pellets can be used for subsequent molding, shaping or forming.

Melt blending methods are preferred due to the availability of melt blending equipment in commercial polymer processing facilities.

Illustrative examples of equipment used in such melt processing methods include: co-rotating and counter-rotating extruders, single screw extruders, co-kneaders, and various other types of extrusion equipment.

The temperature of the melt in the processing is preferably minimized in order to avoid excessive degradation of the polymers. It is often desirable to maintain the melt temperature between 260°C and 300°C in the molten polycarbonate composition, although higher temperatures can be used provided that the residence time of the resin in the processing equipment is kept short.

In some embodiments, the melt processed composition exits processing equipment such as an extruder through small exit holes in a die. The resulting strands of the molten resin are cooled by passing the strands through a water bath. The cooled strands can be shopped into small pellets for packaging and further handling.

According to the second aspect, the present invention provides a molded part produced from the flame-retardant polycarbonate composition according to the first aspect of the present invention.

The flame-retardant polycarbonate composition according to the present invention can be molded into useful shaped articles by a variety of means such as injection molding, extrusion, rotational molding, blow molding and thermoforming to form articles such as, for example, personal computers, notebook and portable computers, cell phone antennas and other communication equipments.

The molded part can be in any shape as desired. For example, it can be flat molded parts.

In some embodiments, the article is injection molded.

According to the third aspect, the present invention provides an article comprising a substrate produced from the flame-retardant polycarbonate composition according to the first aspect of the present invention and a polyurethane layer on at least one side of the substrate.

### Polyurethane

Preferably, the polyurethane layer is formed by complete polymerization of a reactive polyurethane raw material mixture comprising:
at least one polyisocyanate component,
at least one polyfunctional H-active compound, and
optional polyurethane additive and/ or process auxiliary.

Depending on the reactivity of the components of the reactive polyurethane raw material mixture, the components can be premixed or mixed in a known manner during the application. The application can be carried out, inter alia, by Direct-Coating (DC).

Preferably, the H-active polyfunctional compound is a polyol.

As used herein, the term "polyurethane" is understood as also meaning polyurethaneureas, in which those compounds with N-H functionality, optionally in a mixture with polyols, are employed as polyfunctional H-active compounds.

### Polyisocyanates

Suitable polyisocyanates are the aromatic, araliphatic, aliphatic or cycloaliphatic polyisocyanates known per se to the person skilled in the art having an NCO functionality of preferably which can also contain iminooxadiazinedione, isocyanurate, uretdione, urethane, allophanate, biuret, urea, oxadiazinetrione, oxazolidinone, acy-lurea and/or carbodiimide structures. These can be employed individually or in any desired mixtures with one another.

In this context, the abovementioned polyisocyanates are based on di- and triisocyanates which are known per se to the person skilled in the art and have aliphatically, cycloaliphatically, araliphatically and/or aromatically bonded isocyanate groups, it being irrelevant whether these have been prepared using phosgene or by phosgene-free processes. Examples of such di- and triisocyanates are 1,4-diiso-cyanatobutane, 1,5-diisocyanatopentane, 1,6-diisocyanato-hexane (HDI), 2-methyl-1,5-diisocyanatopentane, 1,5-diisocyanato-2,2-dimethylpentane, 2,2,4- and 2,4,4-trimethy1-1,6-diisocyanatohexane, 1,10-diisocyanatodecane, 1,3- and 1,4-diisocyanatocyclohexane, 1,3- and 1,4-bis-(iso-cyanatomethyl)-cyclohexane, 1-isocyanato-3,3,5-trimethy1-5 -isocyanatomethylcyclohexane (isophorone-diisocyanate, IPDI), 4,4'-di-isocyanatodicyclohexylmethane, 4-isocyanatomethy1-1,8-octane-diisocyanate (triisocyanatononane, TIN), w,w'-diisocyanato-1,3-dimethylcyclohexane (H6XDI), isocyanato -1 - methyl -3 -isocyanatomethylcyclohexane, isocyanato -1 -methyl -4 - isocyanatomethylcyclohexane,*bis*- (isocyanatomethyl)-norbomane, 1,5-naphthalene-diisocyanate, 1,3- and 1,4-bis-(2-isocyanatoprop-2-y1)-benzene (TMXDI), 2,4- and 2,6-diisocyanatotoluene (TDI), in particular the 2,4 and the 2,6 isomer and technical grade mixtures of the two isomers, 2,4'- and 4,4'-diisocyanato-diphenylmethane (MDI), polymeric MDI (pMDI), 1,5-diiso-cyanatonaphthalene, 1,3-bis(isocyanatomethyl)benzene (XDI) and any desired mixtures of the compounds mentioned.

In this context, the polyisocyanates preferably have an average NCO functionality of from 2.0 to 5.0, preferably from 2.2 to 4.5, particularly preferably from 2.2 to 2.7, and a content of isocyanate groups of from 5.0 to 37.0 wt. %, preferably from 14.0 to 34.0 wt.%.

In a preferred embodiment, polyisocyanates or polyisocyanate mixtures of the abovementioned type with exclusively aliphatically and/or cycloaliphatically bonded isocyanate groups are employed.

Very particularly preferably, the polyisocyanates of the abovementioned type are based on hexamethylene-diisocyanate, isophorone-diisocyanate, the isomeric bis-(4,4'-iso-cyanatocyclohexyl)-methanes and mixtures thereof.

Among the higher molecular weight, modified polyisocyanates, the prepolymers known from polyurethane chemistry having terminal isocyanate groups of the molecular weight range of 400 to 15,000, preferably 600 to 12,000 are of interest in particular. These compounds are prepared in a manner known per se by reaction of excess amounts of simple polyisocyanates of the type mentioned by way of example with organic compounds having at least two groups which are reactive towards isocyanate groups, in particular organic polyhydroxy compounds. Suitable such polyhydroxy compounds are both simple polyfunctional alcohols of the molecular weight range of 62 to 599, preferably 62 to 200, such as e.g. ethylene glycol, trimethylolpropane, propane-1,2-diol or butane-1,4-diol or butane-2,3-diol, but in particular higher molecular weight polyether polyols and/or polyester polyols of the type known per se from polyurethane chemistry with molecular weights of from 600 to 12,000, preferably 800 to 4,000, which have at least two, as a rule 2 to 8, but preferably 2 to 6 primary and/or secondary hydroxyl groups. Those NCO prepolymers which have been obtained, for example, from low molecular weight polyisocyanates of the type mentioned by way of example and less preferred compounds having groups which are reactive towards isocyanate groups, such as e.g. polythioether polyols, polyacetals containing hydroxyl groups, polyhydroxy-polycarbonates, polyester-amides containing hydroxyl groups or copolymers, containing hydroxyl groups, of olefinically unsaturated compounds, can of course also be employed.

Compounds which have groups which are reactive towards isocyanate groups, in particular hydroxyl, and are suitable for the preparation of the NCO prepolymers are, for example, the compounds disclosed in U.S. Pat. No. 4,218, 543. In the preparation of the NCO prepolymers, these compounds having groups which are reactive towards isocyanate groups are reacted with simple polyisocyanates of the type mentioned above by way of example, while maintaining an NCO excess. The NCO prepolymers in general have an NCO content of from 10 to 26, preferably 15 to 26 wt. %.

As used herein, "NCO prepolymers" or "prepolymers having terminal isocyanate groups" are to be understood as meaning both the reaction products as such and the mixtures with excess amounts of unreacted starting polyisocyanates, which are often also called "semi-prepolymers".

### Polyfunctional H-active compound

Suitable H-active components are polyols having an average OH number of from 5 to 600 mg of KOH/g and an average functionality of from 2 to 6. Polyols having an average OH number of from 10 to 50 mg of KOH/g are preferred. Polyols which are suitable according to the invention are, for example, polyhydroxy-polyethers, which are accessible by alkoxylation of suitable starter molecules, such as ethylene glycol, diethylene glycol, 1,4-dihydroxybutane, 1,6-dihy-droxyhexane, dimethylolpropane, glycerol, pentaerythritol, sorbitol or sucrose Ammonia or amines, such as ethylenedi-amine, hexamethylenediamine, 2,4-diaminotoluene, aniline or amino alcohols, or phenols, such as bisphenol A, can likewise function as starters. The alkoxylation is carried out using propylene oxide and/or ethylene oxide in any desired sequence or as a mixture.

In addition to polyols, at least one further crosslinking agent and/or chain lengthener chosen from the group which contains amines and amino alcohols, for example etha-nolamine, diethanolamine, diisopropanolamine, ethylenedi-amine, triethanolamine, isophoronediamine, N,N'-dimethyl (diethyl)-ethylenediamine, 2-amino-2-methyl(or ethyl)-1-propanol, 2-amino-l-butanol, 3-amino-1,2-propanediol, 2-amino-2-methyl(ethyl)-1,3-propanediol, and alcohols, for example ethylene glycol, diethylene glycol, 1,4-dihydrox-ybutane, 1,6-dihydroxyhexane, dimethylolpropane, glycerol and pentaerythritol, and sorbitol and sucrose, or mixtures of these compounds, can additionally be present.

Polyester polyols such as are accessible in a manner known per se by reaction of low molecular weight alcohols with polyfunctional carboxylic acids, such as adipic acid, phthalic acid, hexahydrophthalic acid, tetrahydrophthalic acid or the anhydrides of these acids are furthermore suitable as long as the viscosity of the H-active component does not become too high. A preferred polyol which contains ester groups is castor oil. In addition, formulations with castor oil such as can be obtained by dissolving resins, e.g. aldehyde-ketone resins, and modifications of castor oil and polyols based on other natural oils are also suitable.

Those higher molecular weight polyhydroxy-polyethers in which high molecular weight polyadducts or poly-condensates or polymers are present in finely disperse, dissolved or grafted-on form are likewise suitable. Such modified polyhydroxy compounds are obtained in a manner known per se, e.g. when polyaddition reactions (e.g. reactions between polyisocyanates and aminofunctional compounds) or polycondensation reactions (e.g. between formaldehyde and phenols and/or amines) are allowed to proceed in situ in the compounds containing hydroxyl groups. However, it is also possible to mix a ready-made aqueous polymer dispersion with a polyhydroxy compound and then to remove the water from the mixture.

Polyhydroxy compounds modified by vinyl polymers, such as are obtained e.g. by polymerization of styrene and acrylonitrile in the presence of polyethers or polycarbonate polyols, are also suitable for the preparation of polyurethanes. If polyether polyols which have been modified in accordance with DE-A 2 442 101, DE-A 2 844 922 and DE-A 2 646 141 by grafting polymerization with vinylphosphonic acid esters and optionally (meth)acrylonitrile, (meth)acrylamide or OH-functional (meth)acrylic acid esters are used, plastics of particular flame resistance are obtained.

Representatives of the compounds mentioned which are to be used as H-active compounds are described e.g. in High Polymers, vol. XVI, "Polyurethanes Chemistry and Technology", Saunders-Frisch (ed.) Interscience Publishers, NewYork, London, vol. 1, p. 32-42, 44, 54 and vol. II, 1984, p. 5-6 and p. 198-199.

Mixtures of the compounds listed can also be employed.

The limit to the average OH number and average functionality of the H-active component results in particular from the increasing embrittlement of the resulting polyurethane. However, the possibilities of influencing the physical polymer properties of the polyurethane are known in principle to the person skilled in the art, so that the NCO component, aliphatic diol and polyol can be coordinated to one another in a favourable manner.

The ratio of isocyanate groups from polyisocyanate to isocyanate-reactive groups, such as hydroxyl groups (NCO/OH ratio) from polyfunctional H-active compound can span a wide range. A ratio of from 0.2:1.0 to 4.0:1.0 can thus be used for coating technology uses. A range of from 0.35: 1 to 2.0:1.0 is preferred, particularly preferably 1.0:1.0 to 1.5:1.0.

All auxiliary substances and additives known per se, such as e.g. release agents, blowing agents, fillers, catalysts and flame retardant agents, can be employed for the production of the polyurethane layer.

In this context, auxiliary substances and additives which are optionally to be used are:
a)Water and/or volatile inorganic or organic substances as blowing agents

Useful organic blowing agents include, for example, acetone, ethyl acetate, halogen-substituted alkanes such as methylene chloride, chloroform, ethylidene chloride, vinylidene chloride, monofluorotrichloromethane, chlorodifluoromethane, dichlorodifluoromethane, and also butane, hexane, heptane or diethyl ether, and useful inorganic blowing agents include air, CO₂ or N₂O. A blowing effect can also be achieved through addition of compounds that decompose at temperatures exceeding room temperature with elimination of gases, for example of nitrogen, examples being azo compounds such as azodicarbonamide and azoisobutyronitrile.

### b)Catalysts

The catalysts are, for example, tertiary amines (such as triethylamine, tributylamine, N-methylmorpholine, N-ethylmorpholine, N,N,N',N'-tetramethylethylenediamine, pentamethyldiethylenetriamine and higher homologues, 1,4-diazabicyclo[2.2.2]octane, N-methyl-N'-dimethylaminoethylpiperazine, bis(dimethylaminoalkyl)piperazines, N,N-dimethylbenzylamine, N,N-dimethylcyclohexylamine, N,N-diethylbenzylamine, bis(N,N-diethylaminoethyl) adipate, N,N,N',N'-tetramethyl-1,3-butanediamine, N,N-dimethyl-β-phenylethylamine, 1,2-dimethyl-imidazole, 2-methylimidazole), monocyclic and bicyclic amides, bis(dialkylamino)alkyl ethers, tertiary amines having amide groups (preferably formamide groups), Mannich bases formed from secondary amines (such as dimethylamine) and aldehydes (preferably formaldehyde or ketones such as acetone, methyl ethyl ketone or cyclohexanone) and phenols (such as phenol, nonylphenol or bisphenol), tertiary amines having hydrogen atoms active toward isocyanate groups (e.g. triethanolamine, triisopropanolamine, N-methyldiethanolamine, N-ethyldiethanolamine, N,N-dimethylethanolamine), and the reaction products thereof with alkylene oxides such as propylene oxide and/or ethylene oxide, secondary/tertiary amines, silaamines having carbon-silicon bonds (2,2,4-trimethyl-2-silamorpholine and 1,3-diethylaminomethyltetramethyldisiloxane), nitrogen-containing bases (such as tetraalkylammonium hydroxides), alkali metal hydroxides (such as sodium hydroxide, alkali metal phenoxides such as sodium phenoxide), alkali metal alkoxides (such as sodium methoxide), and/or hexahydrotriazines.

The reaction between NCO groups and Zerewitinoff-active hydrogen atoms, in a manner known per se, is greatly accelerated by lactams and azalactams as well, with initial formation of an associate between the lactam and the compound having acidic hydrogen.

It is also possible to use organic metal compounds, especially organic tin and/or bismuth compounds, as catalysts. Useful organic tin compounds include, as well as sulphur compounds such as di-n-octyltin mercaptide, preferably tin(II) salts of carboxylic acids such as tin(II) acetate, tin(II) octoate, tin (II) ethylhexoateand tin(II) laurate, and the tin(IV) compounds, for example dibutyltin oxide, dibutyltin dichloride, dibutyltin diacetate, dibutyltin dilaurate, dibutyltin maleate or dioctyltin diacetate. Organic bismuth catalysts are described, for example, in patent application WO 2004/000905.

It is of course possible to use any of the catalysts mentioned above as mixtures. Of particular interest in this context are combinations of organic metal compounds and amidines, aminopyridines or hydrazinopyridines.

The catalysts are generally used in an amount of about 0.001% to 10% by weight, based on the total amount of compounds having at least two hydrogen atoms reactive toward isocyanates.

### c)Surface-active additives such as emulsifiers and foam stabilizers

Useful emulsifiers include, for example, the sodium salts of castor oil sulphonates or salts of fatty acids with amines, such as diethylammonium oleate or diethanolammonium stearate. It is also possible to use alkali metal or ammonium salts of sulphonic acids as surface-active additives as well, for instance of dodecylbenzenesulphonic acid or dinaphthylmethanedisulphonic acid or of fatty acids such as ricinoleic acid or of polymeric fatty acids.

Useful foam stabilizers include particularly polyether siloxanes, especially water-soluble representatives. The structure of these compounds is generally such that a copolymer of ethylene oxide and propylene oxide is bonded to a polydimethylsiloxane radical. Of particular interest are polysiloxane-polyoxyalkylene copolymers with multiple branching via allophanate groups.

### d)Reaction retardants

Useful reaction retardants include, for example, acidic substances (such as hydrochloric acid or organic acid halides).

### e) Additives

Useful PU additives include, for example, cell regulators of the type known per se (such as paraffins or fatty alcohols) or dimethylpolysiloxanes, and also pigments or dyes and flame retardants of the type known per se (for example tris(chloroethyl) phosphate, tricresyl phosphate or ammonium phosphate and polyphosphate), and also stabilizers against ageing and weathering influences, plasticizers and fungistatic and bacteriostatic substances, and also fillers (such as barium sulphate, kieselguhr, carbon black or precipitated chalk).

Further examples of surface-active additives and foam stabilizers, and also cell regulators, reaction retardants, stabilizers, flame-retardant substances, plasticizers, dyes and fillers, and also fungistatic and bacteriostatic substances, for optional additional use in accordance with the invention are known to those skilled in the art and are described in the literature.

Advantageously, the polyurethane layer can have a thickness, for example, from 30 µm to 1500 µm, preferably from 200 µm to 1000 µm, more preferably from 300 µm to 1000 µm.

In a preferred embodiment, the polyurethane coating layer has a thickness of 100-1,500 µm, preferably 200-1000 µm, particularly preferably 300-1000 µm.

According to the fourth aspect, the present invention provides a process for making the article according to the third aspect of the present invention, comprising the following steps:
i) injecting the melt of the composition according to the first aspect of the present invention into a first mould cavity to form a substrate,
(ii) enlarging the cavity of the injection mould to generate a gap between the substrate and the mould surface of the enlarged cavity,
(iii) injecting a polyurethane coating into the gap to form the polyurethane layer, and
(iv) removing the composite component obtained from the mould cavity.

The polyurethane coating can be the reactive polyurethane raw material mixture defined above.

In a specific embodiment, the process comprises the following steps:
(i) injecting the melt of the thermoplastic composition into a first mould cavity to form a substrate,
(ii) enlarging the cavity of the injection mould to generate a gap between the substrate and the mold surface of the enlarged cavity,
(iii) injecting a reactive polyurethane raw material mixture comprising:
   at least one polyisocyanate component,
   at least one polyfunctional H-active compound, and
   optionally at least one polyurethane additive and/or process auxiliary substance is into the gap where the polyurethane raw material mixture is polymerized completely in direct contact with the surface of the substrate to give a polyurethane layer, and
(iv) removing the composite component obtained from the mould cavity.

Before the demoulding of the workpiece in steps (ii) and (iv), the workpiece is cooled down until it is dimensionally stable.

To produce the gap in process step (ii), it is possible to open the injection mould and subsequently to exchange half of the injection mould cavity for a new half with greater cavity dimensions, or to move the component from the first mould cavity to a second cavity which is larger in terms of its cavity dimensions or to a second mould, or to open up the first cavity to create a gap.

The movement of the substrate in process step (ii) can be effected by known processes, as employed, for example, in multicolour injection moulding. Typical methods are firstly movement with a turntable, a turning plate, a sliding cavity or an index plate, or comparable methods in which the substrate remains on a core. If the substrate for movement remains on the core, this has the advantage that the position is defined accurately even after the movement. Secondly, the prior art discloses methods for moving a substrate in which the substrate is removed from a cavity, for example with the aid of a handling system, and placed into another cavity. Movement with removal of the substrate offers greater freedom of configuration in the coating operation, for example in the generation of an edge fold or masked regions.

The following examples are put forth so as to provide those of ordinary skill in the art with a complete disclosure and description of how the compositions, articles, and methods claimed herein are made and evaluated, and are intended to be purely exemplary and are not intended to limit the disclosure.

### Examples

### Materials used

### Component A

Linear bisphenol A polycarbonate, Makrolon^{@}2600, having a relative solution viscosity (ii) (measured on a solution of 0.5 g of polycarbonate in 100 ml of methylene chloride at 25° C.) of 1.28 and a weight-average molecular weight of 26000g/mol, available from Covestro.

### Component B

A core-shell impact modifier ABS (P60) copolymer prepared by emulsion polymerization of 58 wt. %, based on the ABS polymer, of a mixture of 24 wt. % of acrylonitrile and 76 wt. % of styrene in the presence of 42 wt. %, based on the ABS polymer, of a linear polybutadiene rubber.

### Component C

Polyethylene terephthalate (e.g. RT6020, Invista, Gersthofen, Germany) having an intrinsic viscosity of 0.665 dl/g, measured in dichloroacetic acid in a concentration of 1 wt. % at 25° C.

### Component D

Boron-aluminum glass fiber (E glass fiber) with an average diameter of 13 µm and a cut length of 2.5-3.5 mm.

### Component E

The flame retardant is bisphenol-A bis(diphenyl phosphate) (BDP).

### Component F

Joncryl^{®} chain extender ADR 4368 from BASF.

### Component G

G1 is PTFE masterbatch used as anti dripping agent.

G2 is pentaerythritol tetrastearate used as a lubricant/mould release agent.

G3 is Irganox^{®} B900 (mixture of 80% Irgafos^{®} 168 and 20% Irganox^{®} 1076; Irgafos^{®}168: (tris (2,4-di-tert-butylphenyl)phosphite) /Irganox^{®} 1076: (2,6-di-tert-butyl-4-(octadecanoxy-carbonylethyl)-phenol) (BASF AG, Ludwigshafen, Germany) used as heat stabilizer.

### Preparation of the Flame-retardant Polycarbonate compositions

The flame-retardant polycarbonate compositions were prepared in the form of granule on a ZSK26 twin-screw extruder from Coperion, Werner and Pfleiderer (Germany) at melt temperatures of from 270° C. to 300° C.

### Production of the Test Specimens and Testing

The granules obtained were processed on an injection moulding machine (Arburg) at a melt temperature of 260° C and a mold temperature of 80° C to give test specimens.

The articles comprising a substrate produced from the flame-retardant polycarbonate composition and a polyurethane layer were prepared by directcoating (DC) process.

The coating used is a two-component PU coating system including SDB_puroclear_3351 IT (polyol) and Puronate 960/1(diisocyanate) from Ruhl Puromer GmbH.

The melt flowability is evaluated with the aid of the melt volume flow rate (MVR) measured in accordance with ISO 1133-1:2011 at a temperature of 260°C and with a plunger load of 5 kg.

The Vicat softening temperature is determined in accordance with ISO 306:2013 on bars of dimensions 80×10×4 mm.

The determination of the notched impact strength (ak) is carried out in accordance with ISO 180/1A:2000 at room temperature (23°C) by a 10-fold determination on test bars of dimensions 80 mm× 10 mm × 3 mm.

The determination of the unnotched impact strength (an) is carried out in accordance with ISO 180/1U:2000 at room temperature (23°C) by a 10-fold determination on test bars of dimensions 80 mm× 10 mm × 4 mm.

Tensile modulus, tensile stress at break and tensile strain at break are determined by a tensile test at room temperature (23°C) with in accordance with ISO 527-2:2012 on shoulder bars of dimensions 170 mm × 10 mm× 4 mm.

Burning behaviour is evaluated according to UL94:2013.

In order to evaluate the adhesion property, the articles should be aged under the condition of 85 °C and 85% relative humidity for 2 days (This aging condition is defined by PPG and Amazon as their evaluation method for DC) and then the peeling off test is performed on the aged parts to get the peeling force value for comparison. The threshold of average adhesion peeling force value after the aging is required to be higher than 0.5N/mm, which means the adhesion between the substrate and the PU layer is acceptable.

The following examples serve to explain the invention further.

### Inventive Examples 1-7 and Comparative Examples 1-5

The flame-retardant polycarbonate compositions of inventive examples 1-7 (IE1-IE7) and comparative examples (CE1-CE5) containing the components as shown in table 1 were prepared in the form of granules on a ZSK26 twin-screw extruder from Coperion, Werner and Pfleiderer (Germany) at melt temperatures of from 270° C to 300° C.

The MVR of the granules obtained were characterized and the results were summarized in table 1.

Test bars of dimensions 80 mm× 10 mm × 4 mm, 80 mm× 10 mm × 3 mm and shoulder bars of dimensions 170 mm× 10 mm× 4 mm were prepared on the injection moulding machine with the granules obtained for each composition.

The tensile modulus, tensile stress at break, tensile strain at break, Izod notched impact strength, Izod unnotched impact strength, Vicat softening temperature, burning behaviour of the bars were characterized and the results were summarized in table 1.

Articles comprising a substrate produced from the flame-retardant polycarbonate composition and a polyurethane layer with a thickness of 100 µm on one side of the substrate were prepared for each composition.

The adhesion between the substrate and the PU layer of all articles were characterized and the results were summarized in table 1.

**Table 1 Components of flame-retardant polycarbonate compositions of inventive examples (IE1-IE7) and comparative examples (CE1-CE5) and test results**

| Components | | IE1 | IE2 | IE3 | CE1 | CE2 | IE4 | CE3 | IE5 | CE4 | IE6 | IE7 | CE5 |
|---|---|---|---|---|---|---|---|---|---|---|---|---|---|
| polycarbonate | A | 56.8 | 55.8 | 49.8 | 45.8 | 51.6 | 50.8 | 48.8 | 51.6 | 50.1 | 46.8 | 41.8 | 31.8 |
| ABS P60 | B | 4 | 8 | 8 | 15 | 8 | 8 | 8 | 8 | 8 | 8 | 8 | 8 |
| PET | C | 8 | 8 | 8 | 8 | 10 | 10 | 12 | 8 | 8 | 8 | 8 | 8 |
| Glass Fiber | D | 14 | 14 | 14 | 14 | 14 | 14 | 14 | 14 | 14 | 20 | 25 | 35 |
| BDP | E | 15 | 12 | 18 | 15 | 15 | 15 | 15 | 15 | 15 | 15 | 15 | 15 |
| ADR-4368 | F | 0.8 | 0.8 | 0.8 | 0.8 | 0 | 0.8 | 0.8 | 2 | 3.5 | 0.8 | 0.8 | 0.8 |
| PTFE | G1 | 0.8 | 0.8 | 0.8 | 0.8 | 0.8 | 0.8 | 0.8 | 0.8 | 0.8 | 0.8 | 0.8 | 0.8 |
| PETS | G2 | 0.3 | 0.3 | 0.3 | 0.3 | 0.3 | 0.3 | 0.3 | 0.3 | 0.3 | 0.3 | 0.3 | 0.3 |
| Irgaox^{®}B900 | G3 | 0.3 | 0.3 | 0.3 | 0.3 | 0.3 | 0.3 | 0.3 | 0.3 | 0.3 | 0.3 | 0.3 | 0.3 |
| peeling force | N/mm | 0.72 | 1.07 | 0.51 | NA* | 0.45 | 0.75 | 0.30 | 1.37 | NA* | 0.71 | 0.68 | NA* |
| MVR | cm³/10min | 20.0 | 13.4 | 28.7 | 5.76 | 45.2 | 17.8 | 16.4 | 12.0 | 10.3 | 13.6 | 12.7 | 5.10 |
| Tensile modulus (1mm/min) | MPa | 5.63× 10³ | 5.37× 10³ | 5.48 ×10³ | 4.99 ×10³ | 5.24 ×10³ | 5.48 ×10³ | 5.53 ×10³ | 5.51 ×10³ | 5.43 ×10³ | 6.86 ×10³ | 8.27 ×10³ | 1.07 ×10⁴ |
| Tensile stress at break (5mm/min) | MPa | 87.6 | 84.6 | 83.5 | 74.5 | 82.1 | 85.1 | 86.7 | 86.1 | 89.4 | 95.7 | 105 | 114 |
| Tensile strain at break (5mm/min) | % | 2.7 | 2.7 | 2.5 | 2.7 | 2.8 | 2.6 | 2.6 | 2.8 | 3.0 | 2.2 | 2.0 | 1.7 |
| Izod notched impact strength | kJ/m² | 6.1 | 8.2 | 6.0 | 9.6 | 7.9 | 6.1 | 6.2 | 8.5 | 8.8 | 7.0 | 7.4 | 8.2 |
| Izod unnotched impact strength | kJ/m² | 31 | 35 | 29 | 32 | 35 | 29 | 31 | 37 | 38 | 30 | 29 | 32 |
| Vicat softening temperature (50N; 120K/h) | °C | 93.5 | 99.1 | 85.0 | 89 | 91.8 | 90.6 | 90.3 | 91.0 | 91.7 | 88.7 | 86.6 | 81.6 |
| Burning behaviour (1.5mm) | Class | V0 | V0 | V0 | Fail | V0 | V0 | V0 | V0 | V0 | V0 | V0 | V1 |

| | | | | | | | | | | | | | |
|---|---|---|---|---|---|---|---|---|---|---|---|---|---|
| NA* means that the peeling force is not available. | | | | | | | | | | | | | |

As shown in the table 1, the molded part made from the composition IE1 with 4 wt.% of ABS has an average adhesion force with the PU coating layer up to 0.719 N/mm. When the ABS content was increased to 8 wt.% as shown in the composition IE2, the adhesion force went even higher (~1.066 N/mm). However, when the ABS content was further increased to 15 wt % as shown in the composition CE1, the molded part of CE1 failed to pass UL 94 V0 rating at a thickness of 1.5 mm.

And it was also noticed that the addition of the chain extender showed very positive effect on the adhesion strength. The composition CE2 without the chain extender could not achieve acceptable adhesion strength, but with the addition of 0.5 wt% of the chain extender to the IE4 composition, the adhesion strength was increased to 0.75 N/mm. When the chain extender content was increased from 0.8 wt% to 2 wt%, the adhesion strength was increased to 1.374 N/mm. However, when the chain extender content was further increased to 3.5 wt%, the melt volume flow rate is 10.3 cm³/10 min and such a low melt volume flow rate made it difficult for the injection molding process.

When the flame retardant BDP content was increased from 12 wt% (IE2) to 18 wt% (IE3), the average adhesion force value was decreased to a marginal level (0.51N/mm), but still can acceptable. On the other hand, the Vicat temperature was also acceptable.

When the PET content is 10 wt% in the composition IE4, the adhesion strength, the tensile modulus, the heat resistance, and the flame retardant property were well achieved and balanced. However, when the PET content was increased to 12 wt% in the composition CE3, the adhesion force was dramatically dropped to 0.3 N/mm, which is below the acceptable level.

The design trend for ultrabook and tablet is thinner and lighter, so it is required that the housing materials should have good mechanical properties, better flame retardant performance, and high heat resistance, as well as good injection molding process ability. Thus, reinforced polycarbonate materials become more and more popular and have recently been used as dominant materials with high modulus/stiffness, good thermal stability, and high flame retardency. In general, to meet the applications, it is required that the tensile modulus of reinforced materials should be more than 3500 MPa, the Vicat temperature should be not lower than 85°C, and the molded sample of the reinforced polycarbonate composition is capable of achieving UL94 V0 rating at a thickness of 1.5mm.

It showed that the composition IE1 with 14 wt.% of glass fiber has good adhesion strength and necessary mechanical properties. Among the samples of compositions IE6, IE7 and CE5, the glass fiber content was increased to 20 wt%, 25 wt%, and 35 wt% respectively. Although their average adhesion force values were still more than 0.5N/mm, the adhesion strength was relatively decreased. For the composition CE5 with a 35 wt% of the glass fiber, the Vicat temperature was obviously lower than 85 °C. Furthermore, the flame retardant property was also not good and was only a UL94 V1 rating at the thickness of 1.5mm.

## Claims

1. A flame retardant polycarbonate composition comprising the following components:
A) 30-70 wt.% of an aromatic polycarbonate,
B) 3-10 wt.% of a rubber-modified vinyl (co)polymer,
C) 3-11 wt.% of an aromatic polyester;
D) 10-30 wt.% of a reinforcement material;
E) 10-20 wt % of a phosphorus containing flame retardant; and
F) 0.5-3 wt.% of a chain extender;
All contents are based on the total weight of the composition.

2. The composition according to claim 1, wherein the rubber-modified vinyl (co)polymer comprises
B1) 5 to 95, preferably 8 to 90, in particular 20 to 85 wt.%, of at least one vinyl monomer on
B2) 95 to 5, preferably 92 to 10, in particular 80 to 15 wt.%, of one or more graft bases having glass transition temperatures of < 10 °C, determined as indicated in the specification, preferably < 0 °C, particularly preferably < -20 °C,
The wt.% is calculated based on the weight of the rubber-modified vinyl (co)polymer.

3. The composition according to claim 2, wherein the at least one vinyl monomer B1 is a mixture of
B1.1) 50 to 99, preferably 65 to 85, in particular 75 to 80 wt.%., of vinylaromatics and/or vinylaromatics substituted on the nucleus (such as styrene, α-methylstyrene, p-methylstyrene, p-chlorostyrene) and/or methacrylic acid (C₁-C₈)-alkyl esters (such as methyl methacrylate, ethyl methacrylate) and
B1.2) 1 to 50, preferably 15 to 35, in particular 20 to 25 wt.%, of vinyl cyanides (unsaturated nitriles, such as acrylonitrile and methacrylonitrile) and/or (meth)acrylic acid (C₁-C₈)-alkyl esters, such as methyl methacrylate, n-butyl acrylate, t-butyl acrylate, and/or derivatives (such as anhydrides and imides) of unsaturated carboxylic acids, for example maleic anhydride and N-phenyl-maleimide,
The wt.% is calculated based on the weight of the vinyl monomer B1;
and/or
the graft base B2 is chosen from diene rubbers, for example based on butadiene and isoprene, or mixtures of diene rubbers or copolymers of diene rubbers or mixtures thereof with further copolymerizable monomer, with the proviso that the glass transition temperature of component B2 is below < 10 °C, preferably < 0 °C, particularly preferably < -20 °C.

4. The composition according to any of claims 1 to 3, wherein the aromatic polyester is selected from polyethylene terephthalate), poly(1,4-butylene terephthalate) and poly(trimethylene terephthalate).

5. The composition according to any of claims 1 to 4, wherein the reinforcement material is glass fibers consisted of a glass composition selected from the group of M-, E-, A-, S-, R-, AR-, ECR-, D-, Q- or C-glasses.

6. The composition according to any of claims 1 to 5, wherein the phosphorus containing flame retardant is selected from monomeric and oligomeric phosphoric and phosphonic acid esters, phosphonate amines and phosphazenes, preferably phosphorus compounds of the general formula (V): 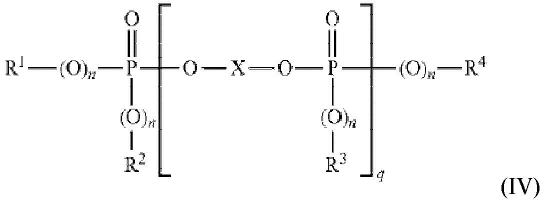 wherein
R¹, R², R³ and R⁴, independently of one another, each denote Cl to C8 alkyl, C5 to C6 cycloalkyl, C6 to C20 aryl or C7 to C12 aralkyl each optionally alkyl-substituted, preferably Cl to C4 alkyl-substituted,
n independently of one another, denotes 0 or 1,
q denotes 0 to 30 and
X denotes a mononuclear or polynuclear aromatic residue with 6 to 30 carbon atoms or a linear or branched aliphatic residue with 2 to 30 carbon atoms, which can be OH-substituted and can contain up to eight ether bonds.

7. The composition according to any of claims 1 to 6, wherein the chain extender is selected from the reaction products of one or more ethylenically unsaturated compounds selected from styrene and ethylene with an epoxy-containing ethylenically unsaturated monomer selected from a glycidyl C₁₋₄ (alkyl)acrylate, allyl glycidyl ethacrylate, and glycidyl itoconate.

8. The composition according to claim 7, wherein the chain extender is selected from styrene-acrylic copolymers containing glycidyl groups incorporated as side chains.

9. The composition according to claim 8, wherein the number of epoxy groups per polymer chain of the styrene-acrylic copolymer is at least 10, preferably greater than 15, more preferably greater than 20.

10. The composition according to any of claims 7-9, wherein the chain extender has a weight-average molecular weight ranging from 3000 to 15000 Daltons, preferably from 4000 to 12000 Daltons, and more preferably ranging from 6000 to 10000 Daltons.

11. The composition according to any of claims 1-10, wherein the chain extender is present in an amount ranging from 0.8 wt % to 2.5 wt %, preferably 0.8 wt% to 2 wt%, relative to the total weight of the composition.

12. A molded part produced from the composition according to any of claims 1 to 11.

13. An article comprising a substrate produced from the polycarbonate composition according to any of claims 1 to 11 and a polyurethane layer on at least one side of the substrate.

14. The article according to claim 13, wherein the polyurethane layer has a thickness from 30 µm to 1500 µm, preferably from 200 µm to 1000 µm, more preferably from 300 µm to 1000 µm.

15. A process for making the article according to claim 13 or 14, comprising:
(i) injecting the melt of the composition according to any of claims 1-11 into a first mould cavity to form a substrate,
(ii) enlarging the cavity of the injection mould to generate a gap between the substrate and the mould surface of the enlarged cavity, and
(iii) injecting a polyurethane coating into the gap to form the polyurethane layer, and
(iv) removing the composite component obtained from the mould cavity.

## Patentansprüche

1. Flammwidrige Polycarbonatzusammensetzung, die die folgenden Komponenten umfasst:
A) 30-70 Gew.-% eines aromatischen Polycarbonats;
B) 3-10 Gew.-% eines kautschukmodifizierten Vinyl-(co)polymers;
C) 3-11 Gew.-% eines aromatischen Polyesters;
D) 10-30 Gew.-% eines Verstärkungsmaterials;
E) 10-20 Gew.-% eines phosphorhaltigen Flammschutzmittels und
F) 0,5-3 Gew.-% eines Kettenverlängerungsmittels;
wobei sich alle Gehalte auf das Gesamtgewicht der Zusammensetzung beziehen.

2. Zusammensetzung nach Anspruch 1, wobei das kautschukmodifizierte Vinyl(co)polymer
B1) 5 bis 95 Gew.-%, vorzugsweise 8 bis 90 Gew.-%, insbesondere 20 bis 85 Gew.-%, mindestens eines Vinylmonomers auf
B2) 95 bis 5 Gew.-%, vorzugsweise 92 bis 10 Gew.-%, insbesondere 80 bis 15 Gew.-%, einer oder mehrerer Pfropfgrundlagen mit Glasübergangstemperaturen von < 10 °C, bestimmt gemäß den Angaben in der Beschreibung, vorzugsweise < 0 °C, besonders bevorzugt < -20 °C,
umfasst, wobei die Gew.-%-Anteile auf der Basis des Gewichts des kautschukmodifizierten Vinyl(co)polymers berechnet werden.

3. Zusammensetzung nach Anspruch 2, wobei es sich bei dem mindestens einen Vinylmonomer B1 um eine Mischung von
B1.1) 50 bis 99 Gew.-%, vorzugsweise 65 bis 85 Gew.-%, insbesondere 75 bis 80 Gew.-%, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-alkylestern (Methylmethacrylat, Ethylmethacrylat) und
B1.2) 1 bis 50 Gew.-%, vorzugsweise 15 bis 35 Gew.-%, insbesondere 20 bis 25 Gew.-%, Vinylcyaniden (ungesättigte Nitrile, wie Acrylnitril und Methacrylnitril) und/oder (Meth)acrylsäure-(C₁-C₈)-alkylestern, wie Methylacrylat, n-Butylacrylat, t-Butylacrylat, und/oder Derivaten (wie Anhydride und Imide) ungesättigter Carbonsäuren, beispielsweise Maleinsäureanhydrid und N-Phenylmaleinimid, handelt, wobei die Gew.-%-Anteile auf der Basis des Gewichts des Vinylmonomers B1 berechnet werden;
und/oder
die Pfropfgrundlage B2 aus Dienkautschuken, beispielsweise auf Basis von Butadien und Isopren, oder Mischungen von Dienkautschuken oder Copolymeren von Dienkautschuken oder Mischungen davon mit weiter copolymerisierbarem Monomer ausgewählt ist, mit der Maßgabe, dass die Glasübergangstemperatur von Komponente B2 unter < 10 °C, vorzugsweise < 0 °C, besonders bevorzugt < - 20 °C, beträgt.

4. Zusammensetzung nach einem der Ansprüche 1 bis 3, wobei der aromatische Polyester aus Polyethylenterephthalat, Poly-1,4-butylenterephthalat und Polytrimethylenterephthalat ausgewählt ist.

5. Zusammensetzung nach einem der Ansprüche 1 bis 4, wobei es sich bei dem Verstärkungsmaterial um Glasfasern handelt, die aus einer Glaszusammensetzung bestehen, die aus der Gruppe der M-, E-, A-, S-, R-, AR-, ECR-, D-, Q- oder C-Gläser ausgewählt ist.

6. Zusammensetzung nach einem der Ansprüche 1 bis 5, wobei das phosphorhaltige Flammschutzmittel ausgewählt ist aus monomeren und oligomeren Phosphor- und Phosphonsäureestern, Phosphonataminen und Phosphazenen, vorzugsweise Phosphorverbindungen der allgemeinen Formel (V): 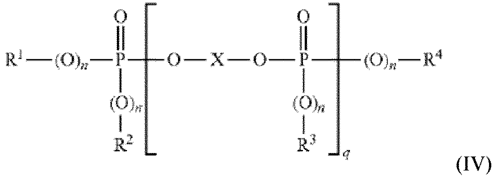 worin
R¹, R², R³ und R⁴ unabhängig voneinander jeweils C₁-bis C₈-Alkyl, C₅- bis C₆-Cycloalkyl, C₆- bis C₂₀-Aryl oder C₇- bis C₁₂-Aralkyl, jeweils gegebenenfalls durch Alkyl substituiert, vorzugsweise durch C₁- bis C₄-Alkyl substituiert, bedeuten,
n unabhängig voneinander 0 oder 1 bedeutet,
q 0 bis 30 bedeutet und
X einen ein- oder mehrkernigen aromatischen Rest mit 6 bis 30 Kohlenstoffatomen oder einen linearen oder verzweigten aliphatischen Rest mit 2 bis 30 Kohlenstoffatomen, der OH-substituiert sein und bis zu acht Etherbindungen enthalten kann, bedeutet.

7. Zusammensetzung nach einem der Ansprüche 1 bis 6, wobei das Kettenverlängerungsmittel ausgewählt ist aus den Reaktionsprodukten von einer oder mehreren ethylenisch ungesättigten Verbindungen, die aus Styrol und Ethylen ausgewählt sind, mit einem epoxidgruppenhaltigen ethylenisch ungesättigten Monomer, das aus Glycidyl-C₁₋₄-(alkyl)acrylat, Allylglycidylethacrylat und Glycidylitaconat ausgewählt ist.

8. Zusammensetzung nach Anspruch 7, wobei das Kettenverlängerungsmittel aus Styrol-Acryl-Copolymeren mit als Seitengruppen eingebauten Glycidylgruppen ausgewählt ist.

9. Zusammensetzung nach Anspruch 8, wobei die Zahl der Epoxidgruppen pro Polymerkette des Styrol-Acryl-Copolymers mindestens 10, vorzugsweise mehr als 15, weiter bevorzugt mehr als 20, beträgt.

10. Zusammensetzung nach einem der Ansprüche 7-9, wobei das Kettenverlängerungsmittel ein gewichtsmittleres Molekulargewicht im Bereich von 3000 bis 15.000 Dalton, vorzugsweise von 4000 bis 12.000 Dalton und weiter bevorzugt im Bereich von 6000 bis 10.000 Dalton aufweist.

11. Zusammensetzung nach einem der Ansprüche 1-10, wobei das Kettenverlängerungsmittel in einer Menge im Bereich von 0,8 Gew.-% bis 2,5 Gew.-%, vorzugsweise 0,8 Gew.-% bis 2 Gew.-%, bezogen auf das Gesamtgewicht der Zusammensetzung, vorliegt.

12. Formteil, hergestellt aus der Zusammensetzung nach einem der Ansprüche 1 bis 11.

13. Artikel, umfassend ein aus der Polycarbonatzusammensetzung nach einem der Ansprüche 1 bis 11 hergestelltes Substrat und eine Polyurethanschicht auf mindestens einer Seite des Substrats.

14. Artikel nach Anspruch 13, wobei die Polyurethanschicht eine Dicke von 30 µm bis 1500 µm, vorzugsweise von 200 µm bis 1000 µm, weiter bevorzugt von 300 µm bis 1000 µm, aufweist.

15. Verfahren zur Herstellung des Artikels nach Anspruch 13 oder 14, das Folgendes umfasst:
(i) Einspritzen der Schmelze der Zusammensetzung nach einem der Ansprüche 1-11 in eine erste Werkzeugkavität zur Bildung eines Substrats,
(ii) Vergrößern der Kavität des Spritzgusswerkzeugs zur Erzeugung eines Spaltraums zwischen dem Substrat und der Werkzeugoberfläche der vergrößerten Kavität und
(iii) Einspritzen einer Polyurethanbeschichtung in den Spaltraum zur Bildung der Polyurethanschicht und iv) Herausnehmen des erhaltenen Verbundbauteils aus der Werkzeugkavität.

## Revendications

1. Composition de polycarbonate ignifugeant comprenant les composants suivants :
A) 30 à 70 % en poids d'un polycarbonate aromatique,
B) 3 à 10 % en poids d'un (co)polymère vinylique modifié par un caoutchouc,
C) 3 à 11 % en poids d'un polyester aromatique ;
D) 10 à 30 % en poids d'un matériau de renforcement ;
E) 10 à 20 % en poids d'un agent ignifugeant contenant du phosphore ; et
F) 0,5 à 3 % en poids d'un extenseur de chaînes ;
toutes les teneurs étant basées sur le poids total de la composition.

2. Composition selon la revendication 1, le (co)polymère vinylique modifié par un caoutchouc comprenant
B1) 5 à 95, préférablement 8 à 90, en particulier 20 à 85 % en poids, d'au moins un monomère vinylique sur
B2) 95 à 5, préférablement 92 à 10, en particulier 80 à 15 % en poids, d'une ou plusieurs bases de greffage possédant des températures de transition vitreuse de < 10 °C, déterminées comme indiqué dans la description, préférablement < 0 °C, particulièrement préférablement < -20 °C,
les % en poids étant calculés sur la base du poids du (co)polymère vinylique modifié par un caoutchouc.

3. Composition selon la revendication 2, l'au moins un monomère vinylique B1 étant un mélange de
B1.1) 50 à 99, préférablement 65 à 85, en particulier 75 à 80 % en poids, de composés vinylaromatiques et/ou de composés vinylaromatiques substitués sur le noyau (tels que le styrène, l'α-méthylstyrène, le p-méthylstyrène, le p-chlorostyrène) et/ou d'esters d'alkyle en (C₁₋₈) d'acide méthacrylique (tels que le méthacrylate de méthyle, le méthacrylate d'éthyle) et
B1.2) 1 à 50, préférablement 15 à 35, en particulier 20 à 25 % en poids de cyanures de vinyle (nitriles insaturés, tels que l'acrylonitrile et le méthacrylonitrile) et/ou d'esters d'alkyle en (C₁₋₈) d'acide (méth)acrylique, tels que le méthacrylate de méthyle, l'acrylate de n-butyle, l'acrylate de t-butyle, et/ou de dérivés (tels que des anhydrides et des imides) d'acides carboxyliques insaturés, par exemple l'anhydride maléique et le N-phényl-maléimide,
les % en poids étant calculés sur la base du poids du monomère vinylique B1 ;
et/ou
la base de greffage B2 étant choisie parmi des caoutchoucs de diène, par exemple à base de butadiène et d'isoprène, ou des mélanges de caoutchoucs de diène ou de copolymères de caoutchoucs de diène ou de mélanges correspondants avec un monomère copolymérisable supplémentaire, à la condition que la température de transition vitreuse du composant B2 soit inférieure à < 10 °C, préférablement < 0 °C, particulièrement préférablement < -20 °C.

4. Composition selon l'une quelconque des revendications 1 à 3, le polyester aromatique étant choisi parmi un poly(téréphtalate d'éthylène), un poly(téréphtalate de 1,4-butylène) et un poly(téréphtalate de triméthylène).

5. Composition selon l'une quelconque des revendications 1 à 4, le matériau de renforcement étant des fibres de verre constituées d'une composition de verre choisie dans le groupe composé par des verres M, E, A, S, R, AR, ECR, D, Q ou C.

6. Composition selon l'une quelconque des revendications 1 à 5, l'agent ignifugeant contenant du phosphore étant choisi parmi des esters d'acide phosphorique et phosphonique monomériques et oligomériques, des phosphonate amines et des phosphazènes, préférablement des composés du phosphore de la formule générale (V) : 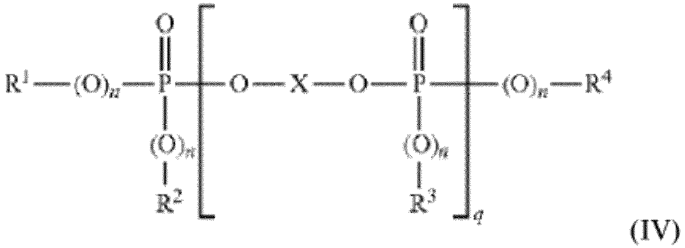
R¹, R², R³ et R⁴, indépendamment les uns des autres, désignant chacun alkyle en C1 à C8, cycloalkyle en C5 à C6, aryle en C6 à C20 ou aralkyle en C7 à C12 chacun éventuellement substitué par alkyle, préférablement substitué par alkyle en C1 à C4,
n désignant indépendamment les uns des autres 0 ou 1,
q désignant 0 à 30 et
X désignant un radical aromatique mononucléaire ou polynucléaire comportant 6 à 30 atomes de carbone ou un radical aliphatique linéaire ou ramifié comportant 2 à 30 atomes de carbone, qui peut être substitué par OH et peut contenir jusqu'à huit liaisons éther.

7. Composition selon l'une quelconque des revendications 1 à 6, l'extenseur de chaînes étant choisi parmi les produits de réaction d'un ou plusieurs composés éthyléniquement insaturés choisis parmi le styrène et l'éthylène avec un monomère éthyléniquement insaturé contenant époxy choisi parmi un C₁₋₄ (alkyl)acrylate de glycidyle, l'éthacrylate d'allyle de glycidyle, et l'itaconate de glycidyle.

8. Composition selon la revendication 7, l'extenseur de chaînes étant choisi parmi des copolymères de styrène-acrylique contenant des groupes glycidyle incorporés comme chaînes latérales.

9. Composition selon la revendication 8, le nombre de groupes époxy par chaîne de polymère du copolymère de styrène-acrylique étant d'au moins 10, préférablement supérieur à 15, plus préférablement supérieur à 20.

10. Composition selon l'une quelconque des revendications 7 à 9, l'extenseur de chaînes possédant un poids moléculaire moyen en poids dans la plage de 3 000 à 15 000 Daltons, préférablement de 4 000 à 12 000 Daltons, et plus préférablement dans la plage de 6 000 à 10 000 Daltons.

11. Composition selon l'une quelconque des revendications 1 à 10, l'extenseur de chaînes étant présent en une quantité dans la plage de 0,8 % en poids à 2,5 % en poids, préférablement 0,8 % en poids à 2 % en poids, par rapport au poids total de la composition.

12. Pièce moulée produite à partir de la composition selon l'une quelconque des revendications 1 à 11.

13. Article comprenant un substrat produit à partir de la composition de polycarbonate selon l'une quelconque des revendications 1 à 11 et une couche de polyuréthane sur au moins un côté du substrat.

14. Article selon la revendication 13, la couche de polyuréthane possédant une épaisseur de 30 µm à 1 500 µm, préférablement de 200 µm à 1 000 µm, plus préférablement de 300 µm à 1 000 µm.

15. Procédé pour la fabrication de l'article selon la revendication 13 ou 14, comprenant :
(i) l'injection de la masse fondue de la composition selon l'une quelconque des revendications 1 à 11 dans une première cavité de moule pour former un substrat,
(ii) l'agrandissement de la cavité du moule pour injection pour générer un espace entre le substrat et la surface de moule de la cavité agrandie, et
(iii) l'injection d'un revêtement de polyuréthane dans l'espace pour former la couche de polyuréthane, et
(iv) l'élimination du composant composite obtenu de la cavité de moule.
